# EUROPEAN PATENT APPLICATION

(11) **EP 2 597 592 A1**
(43) Date of publication of application: **29.05.2013**
(21) Application number: 12193777.5
(22) Date of filing: 22.11.2012
(51) Int. Cl.: G06F 21/62

(54) **Information processing program, information processing apparatus, information processing system, and information processing method**

(30) Priority: 24.11.2011 JP 2011256475
(71) Applicant: Nintendo Co., Ltd., Kyoto, 601-8501 (JP)
(72) Inventor: Nukui, Takatomo, Kyoto, 601-8501 (JP); Kyogoku, Aya, Kyoto, 601-8501 (JP)
(74) Representative: Lang, Johannes

(57) **Abstract**

[Object] To reduce the hassle of operations performed by an administrator in an information processing apparatus having a function for restricting use of a resource by software.

[Means for Solution] An information processing program that causes a computer of an information processing apparatus 1 including a restricting unit 52 which restricts use of software or use of a function of the information processing apparatus 1 by software, to function as: a releasing unit 53 which releases, on a per software basis, a restriction by the restricting unit 52 even in a state where the restriction by the restricting unit 52 is enabled; and a release continuing unit 54 which makes the release by the releasing unit 53 continuous by permitting reading of release information indicating that the release by the releasing unit 53 is enabled, upon execution of release subject software that is to be subjected to the release.

## Description

### [Technical Field]

The present invention relates to an information processing program, an information processing apparatus, an information processing system, and an information processing method.

### [Background Art]

Conventionally, a technique is available for configuring a restriction on the use of a predetermined function on a gaming machine.

### [Prior Art Document]

### [Non-Patent Document]

[Non-Patent document 1] Nintendo Co., Ltd., "Nintendo 3DS User's Manual", pages 94 to 97

### [Summary of the Invention]

### [Problems to be solved by the Invention]

Conventionally, there is an information processing apparatus having a function for restricting execution of software, a function for restricting use by software of a function provided in the information processing apparatus, or the like. However, such restrictions uniformly restrict the execution of software even in a case where the software is determined safe to execute by an administrator. Consequently, the administrator must perform an operation to temporarily release the restriction each time the software is executed. Such an operation may prove to be a hassle.

The present invention has been made in consideration of the problem described above, and an object thereof is to reduce the hassle of operations performed by an administrator in an information processing apparatus having a function for restricting use of a resource by software.

### [Means for solving the Problems]

In the present invention, the following means have been adopted in order to solve the problem described above. Specifically, the present invention is an information processing program that causes a computer of an information processing apparatus including restricting means for restricting use of software or use of a function of the information processing apparatus by software, to function as: releasing means for releasing, on a per software basis, a restriction by the restricting means even in a state where the restriction by the restricting means is enabled; and release continuing means for making the release by the releasing means continuous by permitting reading of release information indicating that the release by the releasing means is enabled, upon execution of release subject software that is to be subjected to the release.

In other words, in an information processing apparatus having a function for restricting the use of software or the use of a function of the information processing apparatus by software, the present invention permits the restriction to be continuously released on a per software basis. In this case, the restricting means may restrict the use of all or a part of resources of the information processing apparatus by software. Resources of the information processing apparatus include various hardware resources of the information processing apparatus such as a processor, a main memory, a communication device, and an imaging device, as well as various software resources such as an API (Application Program Interface) provided by the information processing apparatus and a module contained in the subject software itself. For example, when the use of a communication device by software is restricted, the software is unable to perform communication. In addition, when the use of a main memory by software is restricted, since the software is not loaded onto the main memory, the execution of the software itself is restricted.

Furthermore, in the present disclosure, types of software to be subjected to a restriction by the restricting means and a release by the releasing means are not particularly limited. For example, in addition to general application software, subject software may include game software, service software executed by a server, acoustic software, and video software. For example, when the use of resources by acoustic or video software is restricted, playback by the software is restricted.

Moreover, software to be subjected to a restriction by the restricting means may include at least a part of the information processing program, and the release continuing means may permit reading of the release information upon execution of the release subject software by at least a part of the information processing program included in the software being executed.

By adopting such a configuration, during the execution of software to be subjected to a restriction, release information can be set from the software to make the release by the releasing means continuous.

In addition, the information processing program may further cause the computer to function as judging means for judging whether or not the information processing apparatus has been specified as an information processing apparatus that provides the release subject software with a release by the releasing means, and the releasing means may release the restriction by the restricting means when the judging means judges that the information processing apparatus is the specified information processing apparatus.

By adopting such a configuration, the information processing apparatus that is hardware for which a release of the restriction may be enabled may be combined with software for which a release of the restriction may be enabled, and the release of the restriction may be performed when the combination proves consistent.

Furthermore, the release information may include collating information for judging whether or not the information processing apparatus is the specified information processing apparatus, and the judging means may judge whether or not the information processing apparatus is the specified information processing apparatus by collating predetermined information that can be acquired from the information processing apparatus with the collating information.

Moreover, the predetermined information that can be acquired from the information processing apparatus may include a password for authenticating an administrator of the information processing apparatus.

In addition, the information processing program may further cause the computer to function as modifying means for modifying the predetermined information that can be acquired from the information processing apparatus.

The collating information is retained by one or more software titles that are subjected to a release. Therefore, by modifying the predetermined information of the information processing apparatus, collation by the judging means can be foiled and a continuous release setting that is configured on the one or more software titles can be uniformly disabled.

Furthermore, the release continuing means may permit reading of the release information upon execution of the release subject software by having this software retain the release information.

By having the release subject software retain the release information, even in a case where the information processing apparatus does not have a function for continuous release, a mechanism for continuous release can be mounted to the software to provide a user with a continuous release function.

Moreover, the software may be software recorded on a portable medium that is attachable/detachable to/from the information processing apparatus, and the release continuing means may permit reading of the release information when the software is mounted to the information processing apparatus and executed, by having the software retain the release information.

By adopting such a configuration, an information processing apparatus that is hardware for which a release of the restriction may be enabled can be combined with a portable medium storing software for which a release of the restriction may be enabled.

In addition, the information processing may further cause the computer to function as configuring means for enabling or disabling a release by the releasing means and for, when enabling the release, configuring whether the release by the releasing means is to be made continuous or temporary by determining whether to cause the release continuing means to permit reading of the release information.

Furthermore, the restricting means may restrict the use of all or a part of the resources for each user set in the information processing apparatus, and the releasing means may release the restriction by the restricting means for each user set in the information processing apparatus.

Moreover, the releasing means may release the restriction by the restricting means for each user registered to the software.

In addition, the releasing means may release the restriction by the restricting means for each resource of the information processing apparatus or for each function executed by the software.

Furthermore, the present invention can also be viewed as a method executed by a computer or as a program to be executed by a computer. Moreover, the present invention may be embodied by a recording of such a program on a recording medium that is readable by an apparatus such as a computer, a machine, or the like. In this case, a recording medium that is readable by a computer or the like refers to a recording medium which accumulates information such as data or programs by an electric action, a magnetic action, an optical action, a mechanical action, or a chemical action and which enables such information to be read by a computer or the like.

### [Effects of the invention]

According to the present invention, an administrator can now perform operations with less hassle in an information processing apparatus having a function for restricting use of a resource by software.

### [Brief Description of the Drawings]

FIG. 1 is a diagram schematically showing a hardware configuration of an information processing apparatus according to an embodiment;
FIG. 2 is a diagram schematically showing a functional configuration of an information processing apparatus according to an embodiment;
FIG. 3 is a diagram schematically showing a hardware configuration of an information processing apparatus according to an embodiment;
FIG. 4 is a diagram schematically showing a functional configuration of an information processing apparatus according to an embodiment;
FIG. 5A is a flow chart A showing a flow of restriction release-related processes according to an embodiment;
FIG. 5B is a flow chart B showing a flow of restriction release-related processes according to an embodiment;
FIG. 5C is a flow chart C showing a flow of restriction release-related processes according to an embodiment;
FIG. 5D is a flow chart D showing a flow of restriction release-related processes according to an embodiment; and
FIG. 5E is a flow chart E showing a flow of restriction release-related processes according to an embodiment.

### [Description of the Preferred Embodiments]

Hereinafter, embodiments of the present invention will be described with reference to the drawings. It should be understood that the embodiments described below merely represent exemplary implementations of the present invention and that the present invention is not limited to the specific configurations described below. When implementing the present invention, specific configurations in accordance with various embodiments may be adopted as appropriate. For example, in addition to being applicable to general application programs, general computer systems, general methods executed by computer systems, and the like, the present invention can also be applied to a game program, a game apparatus, a game system, and a game method, as well as to an acoustic or video playback program, an acoustic or video playback apparatus, an acoustic or video playback system, and an acoustic or video playback method.

### <First embodiment>

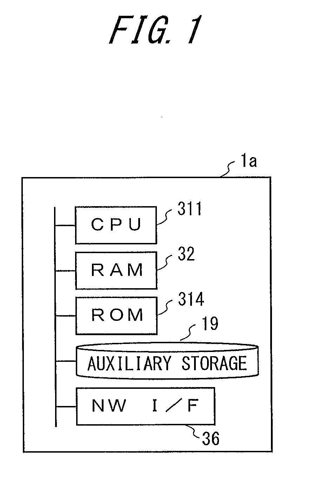

FIG. 1 is a diagram schematically showing a hardware configuration of an information processing apparatus 1a according to the present embodiment. The information processing apparatus 1a is an information processing apparatus in which a CPU (Central Processing Unit) 311, a RAM (Random Access Memory) 32, a ROM (Read Only Memory) 314, an auxiliary storage 19, and a network interface 36 for communicating to the outside via a network are electrically connected to each other. Moreover, as for a specific hardware configuration of the information processing apparatus 1a, components may be omitted, replaced, or added as appropriate in accordance with embodiments.

The CPU 311 is a central processing unit which controls respective components of the information processing apparatus 1a such as the RAM 32 and the auxiliary storage 19 by processing an instruction and data expanded on the RAM 32, the ROM, and the like. In addition, the RAM 32 is a main storage which is controlled by the CPU 311. Various instructions and data are written into and read from the RAM 32. In other words, the CPU 311, the RAM 32, and the ROM constitute a control unit of the information processing apparatus 1a.

The auxiliary storage 19 is a non-volatile storage device. information that is desirably retained even after the information processing apparatus 1a is turned off such as an OS (Operating System) of the information processing apparatus 1a that is loaded to the RAM 32, various programs for executing the processes described later, and various types of data to be used by the information processing apparatus 1a are primarily written into and read from the auxiliary storage 19. For example, an EEPROM (Electrically Erasable Programmable ROM) or an HDD (Hard Disk Drive) can be used as the auxiliary storage 19. In addition, a portable medium attachably/detachably mounted to/from the information processing apparatus 1a may be used as the auxiliary storage 19. Examples of a portable medium include a memory card constituted by an EEPROM or the like, a CD (Compact Disc), a DVD (Digital Versatile Disc), and a BD (Blu-ray Disc). An auxiliary storage 19 constituted by a portable medium and an auxiliary storage 19 that is not portable can be used in combination with each other.

### (Summary of Functions)

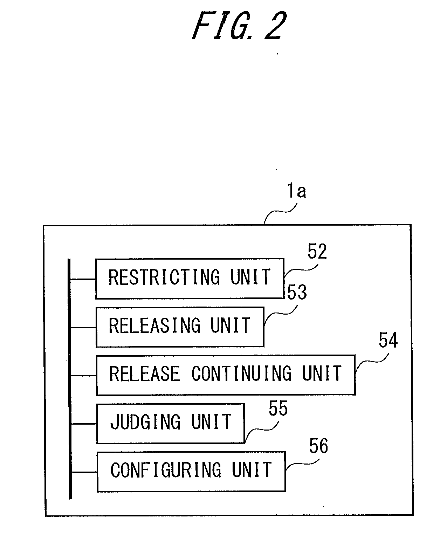

Next, functions included in the information processing apparatus 1a according to the present embodiment will be described. FIG. 2 is a diagram schematically showing a functional configuration of the information processing apparatus 1a according to the present embodiment. As a result of the CPU 311 interpreting and executing various programs expanded on the RAM 32, the information processing apparatus 1a according to the present embodiment functions as an information processing apparatus comprising a restricting unit 52, a releasing unit 53, a release continuing unit 54, a judging unit 55, and a configuring unit 56. While an example in which all of these functions are executed by a general-purpose CPU 311 is described in the present embodiment, alternatively, a part of or all of these functions may be realized by one or more dedicated processors.

For example, the information processing apparatus 1a may be implemented on a cloud, on a server, or on a user terminal 5. In addition, these functional units may be realized by a plurality of software titles instead of by a single software title. For example, a part of the functional units described above (for example, the restricting unit 52) may be realized by executing software recorded on a medium built into the information processing apparatus 1a (for example, an OS of the information processing apparatus 1a or security software installed on the information processing apparatus 1a), and other functional units (for example, the releasing unit 53 and the release continuing unit 54) may be realized by executing software which is recorded on a portable medium attachably/detachably mounted to/from the information processing apparatus 1a and which is to be subjected to a restriction by the restricting unit 52.

The restricting unit 52 restricts the use of all or a part of resources of the information processing apparatus 1a by software. Resources of the information processing apparatus 1a include hardware resources and software resources. For example, in addition to the CPU 311, the RAM 32, the ROM, the auxiliary storage 19, and the network interface 36 described with reference to FIG. 1, hardware resources may include various types of hardware which the information processing apparatus 1a may comprise such as an imaging device. In addition, software resources refer to various types of software including an API provided by the information processing apparatus 1a and a module contained in the subject software itself. For example, when the use of the network interface 36 is restricted, the subject software is unable to perform communication. In addition, when the use of the RAM 32 is restricted, since the subject software is not loaded onto the RAM 32, the execution of the subject software itself is restricted.

In the present embodiment, in addition to general application software, examples of software to be subjected to a restriction by the restricting means and a release by the releasing means include game software, service software executed on a server, acoustic software such as MP3 (MPEG Audio Layer-3), and video software such as MPEG. In other words, in the present embodiment, execution of software includes playback of acoustic software, video software, or game software.

A restriction by the restricting unit 52 can be enabled/disabled by an administrator. An enabled/disabled state of a restriction by the restricting unit 52 is recorded onto the auxiliary storage 19 or the like of the information processing apparatus 1a. Therefore, in processes described later, by reading and referencing contents of a configuration of the enabled/disabled state, the releasing unit 53, the release continuing unit 54, or the like can learn whether the restriction by the restricting unit 52 is enabled or disabled. In addition, information that allows a restriction subject resource to be known is further recorded on the auxiliary storage 19. For example, when a resource for communication is set as a restriction subject, information that specifies the network interface 36 and a communication API is recorded as restriction subjects on the auxiliary storage 19.

In the present embodiment, a restriction by the restricting unit 52 is applied to all software executed by the information processing apparatus 1a or to software having a predetermined attribute. However, in the present embodiment, by performing a release by the releasing unit 53, the restriction can be released on a per software basis to allow use of the restriction subject resource.

Even in a state where a restriction by the restricting unit 52 is enabled, the releasing unit 53 releases the restriction on a per software basis. The release by the releasing unit 53 may be made either temporary or continuous. In a case where the release is made temporary, a period of the release is limited to a duration of a present execution of the release subject software. In a case where the release is made continuous, when the software set as the release subject is executed for a next time and thereafter, the release by the releasing unit 53 is automatically performed once again. In the present embodiment, when the release is made continuous, release information is set by the release continuing unit 54.

The release continuing unit 54 makes a release continuous by recording release information indicating that the release by the releasing unit 53 is enabled into a storage area readable upon execution of release subject software that is to be subjected to the release. Moreover, the releasing unit 53 and the release continuing unit 54 may be executed upon execution of software that is the subject of restriction by the restricting unit 52 as a part of a function provided by the software. In this case, whether or not a resource can be used is not determined before software is read into the memory but, rather, is determined during the execution of the software by the software being executed.

Release information is information which indicates that a release by the releasing unit 53 is enabled and which is recorded on a recording medium that can be referenced by the information processing apparatus 1a (for example, the auxiliary storage 19). For example, the medium on which the release information is recorded may be a medium built into the information processing apparatus 1a or a portable medium that is attachable/detachable to/from the information processing apparatus 1a. In addition, the release information can be retained in software to be subjected to the release. For example, in a second embodiment (to be described later), release information is recorded on a portable medium that is attachable/detachable to/from the information processing apparatus 1a together with software to be subjected to the release.

Furthermore, release information includes collating information used in a judgment by the judging unit 55 (to be described later) and information by which a resource to be released can be identified. In this case, collating information refers to information to be collated with identification information or the like of the information processing apparatus 1a in which software is executed when judging whether or not the information processing apparatus 1a has been specified by the administrator as the information processing apparatus 1a for which a resource use restriction can be released. Therefore, information including identification information of the information processing apparatus 1a which has been read when a release is configured is set as the collating information. For example, an apparatus ID (a serial number, a MAC address, or the like) can be used as the identification information of the information processing apparatus 1a for which a resource use restriction can be released.

Moreover, in the present embodiment, a judgment method is adopted which judges that continuous release is enabled when the release information is retained and which judges that continuous release is disabled when the release information is not retained. However, instead of such a method, other judgment methods may be adopted such as a judgment method which judges that continuous release is enabled/disabled based on a state (true/false) of a continuous release flag included in release information.

The judging unit 55 judges whether or not the information processing apparatus 1a is the information processing apparatus 1a that provides the release subject software with a release by the releasing unit 53 by collating predetermined information with the collating information. In other words, when the judging unit 55 judges that the information processing apparatus 1a is the specified information processing apparatus 1a, the releasing unit 53 releases a restriction by the restricting unit 52 on a per software basis even in a state where the restriction is enabled. Moreover, the judgment of whether or not the information processing apparatus 1a is the information processing apparatus 1a that provides the software with a release by the releasing unit 53 may be performed by means other than collation. In addition, from the perspective of tightening security, a hash value of information retained by the information processing apparatus 1a may be retained as collating information, and upon collation, a hash value of information retained by the information processing apparatus 1a may be calculated and collated with the collating information.

The configuring unit 56 enables/disables a release by the releasing unit 53. Furthermore, when enabling the release, the configuring unit 56 configures whether to make the release by the releasing unit 53 continuous or temporary is enabled by determining whether to cause the release continuing unit 54 to permit reading of the release information. In other words, in accordance with a result of determination by the configuring unit 56, the release continuing unit 54 records the release information on a recording medium that can be referenced by the information processing apparatus 1a to make the release continuous.

### <Second embodiment>

Next, an embodiment in which the present invention is implemented in an information processing apparatus 1 as a game apparatus will be described. The information processing apparatus 1 according to the present embodiment is a variation of the information processing apparatus 1a described in the first embodiment and has roughly the same configuration as the information processing apparatus 1a described in the first embodiment. Therefore, components described in the first embodiment above will be denoted by same reference numerals in the drawings and a description thereof will be omitted.

### (Configuration of apparatus)

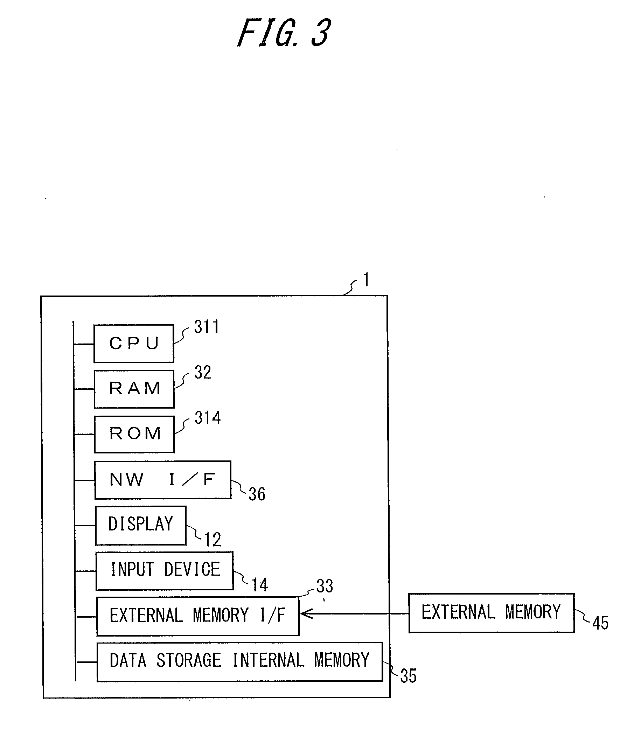

FIG. 3 is a diagram schematically showing a hardware configuration of the information processing apparatus 1 according to the present embodiment. The information processing apparatus 1 is an information processing apparatus in which a CPU 311, a RAM 32, a ROM 314, an external memory interface 33, a data storage internal memory 35, a network interface 36, a display 12, and an input device 14 are electrically connected to each other. An external memory 45 is attachably/detachably connected to/disconnected from the external memory interface 33. Moreover, as for a specific hardware configuration of the information processing apparatus 1, components may be omitted, replaced, or added as appropriate in accordance with embodiments.

### (Configuration of Functions)

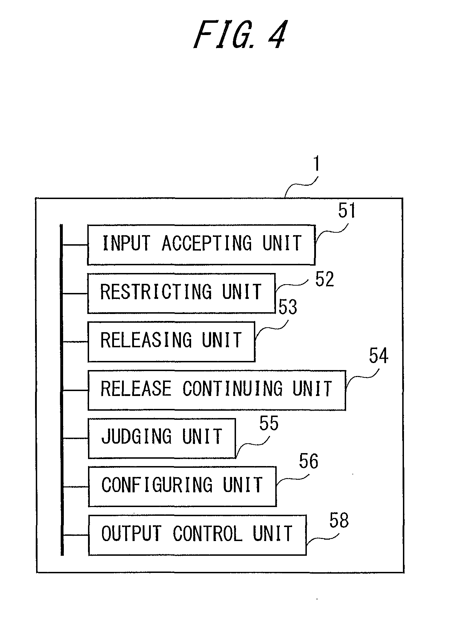

FIG. 4 is a diagram schematically showing a functional configuration of the information processing apparatus 1 according to the present embodiment. As a result of the CPU 311 reading programs stored in the external memory 45, the data storage internal memory 35, and the like onto the RAM 32 and executing the programs, the information processing apparatus 1 operates as an information processing apparatus comprising an input accepting unit 51, a restricting unit 52, a releasing unit 53, a release continuing unit 54, a judging unit 55, a configuring unit 56, and an output control unit 58. Among these functional units, since the restricting unit 52, the releasing unit 53, the release continuing unit 54, the judging unit 55, and the configuring unit 56 are approximately similar to those described with reference to FIG. 2, a description thereof will be omitted. In addition, the information processing apparatus 1 may also comprise other functions not illustrated.

The input accepting unit 51 accepts an input based on a user operation. For example, operations accepted by the input accepting unit 51 include a game operation using the input device 14 and operations for selecting and deciding on an option in restriction release-related processes (to be described later).

The output control unit 58 outputs information generated in game processes as well as messages, options, and the like which are notified to the user in restriction release-related processes (to be described later) to the display 12, and causes the display 12 to display the same.

### (Flow of processes)

Next, a flow of processes executed in the present embodiment will be described. Moreover, specific contents of processes and sequences of processes depicted in flow charts according to the present embodiment are examples for implementing the present invention. Specific contents and sequences of the processes may be selected as appropriate in accordance with embodiments of the present invention.

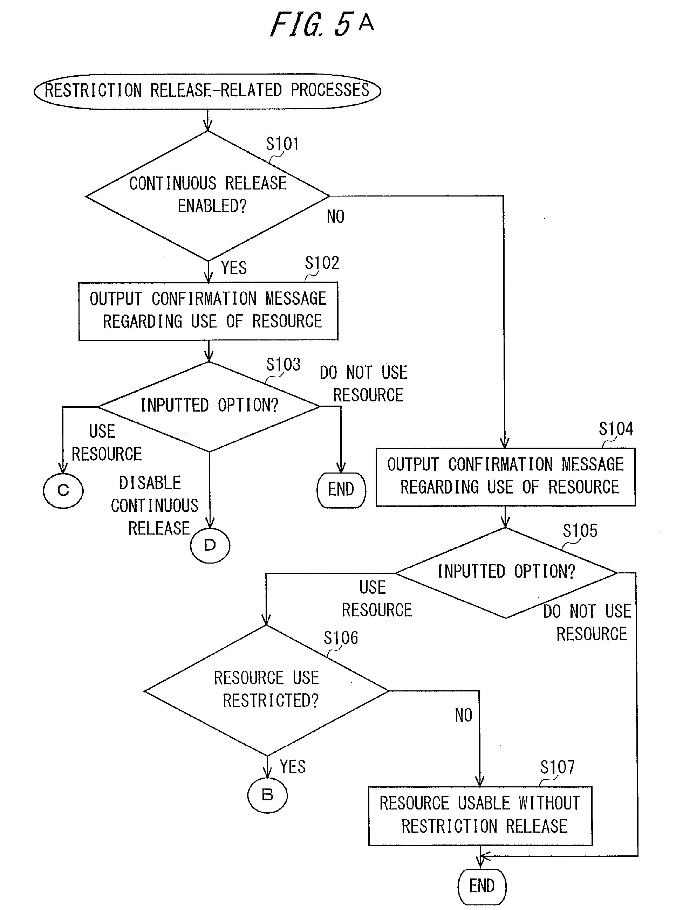

FIGS. 5A to 5E are flow charts showing a flow of restriction release-related processes according to the present embodiment. The restriction release-related processes shown in the present flow charts are executed upon activation of a game or when a predetermined function is called during processing of the game. In the present embodiment, game processing software recorded in advance on the external memory 45 or the like is read into and executed on the RAM 32. The processes shown in the present flow charts are executed during the processing of a game that is processed when the game processing software is executed.

First, among the restriction release-related processes according to the present embodiment, a flow of processes related to a state of continuous release and a judgment of whether or not a resource is usable will be described with reference to FIG. 5A.

In step S101, a judgment is made on whether or not a continuous release of software recorded on the external memory 45 is enabled. The releasing unit 53 references release information stored (retained) in the external memory 45 connected to the external memory interface 33. The release information is information indicating that the software stored in the external memory 45 (in the present embodiment, game software) is capable of ignoring (releasing) a restriction by the restricting unit 52 and using a predetermined resource of the information processing apparatus 1 even in a state where the restriction is enabled. For example, the release information is retained within saved data of the software. At this point, if it is judged that release information is recorded (continuous release is enabled), processing proceeds to step S102. On the other hand, if it is judged that release information is not recorded (continuous release is not enabled), the processing proceeds to step S104.

Whether or not continuous release is enabled is judged for each type of resource to be subjected to restriction by referencing information which allows the resource to be known and which is included in the release information. Therefore, in the processes described hereafter, whether or not a restriction by the restricting unit 52 is enabled, whether or not a release by the releasing unit 53 is enabled, and whether or not release information is to be recorded or deleted by the release continuing unit 54 are judged and processed for each processing subject resource.

In steps S102 and S103, a confirmation message regarding the use of a predetermined resource of the information processing apparatus 1 is output and an input of an option is accepted. For example, by outputting a message such as "Do you want to communicate with another player?" to the display 12, the output control unit 58 confirms use of a predetermined resource of the information processing apparatus 1 (step S102). The message above is a confirmation message regarding the use of a resource for communication. Examples of a resource for communication include the network interface 36 of a wireless communication module or the like.

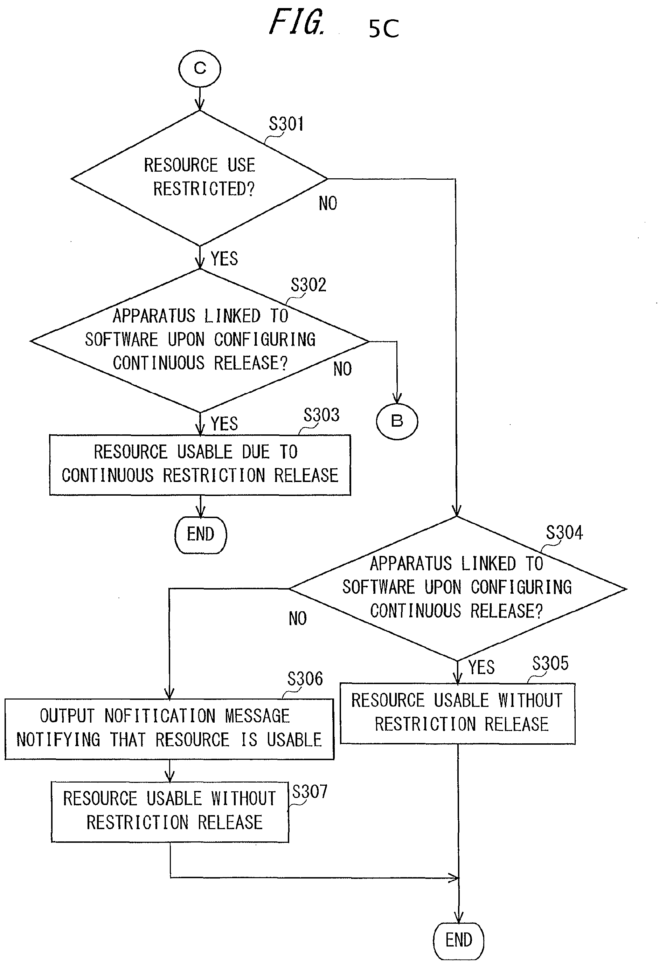

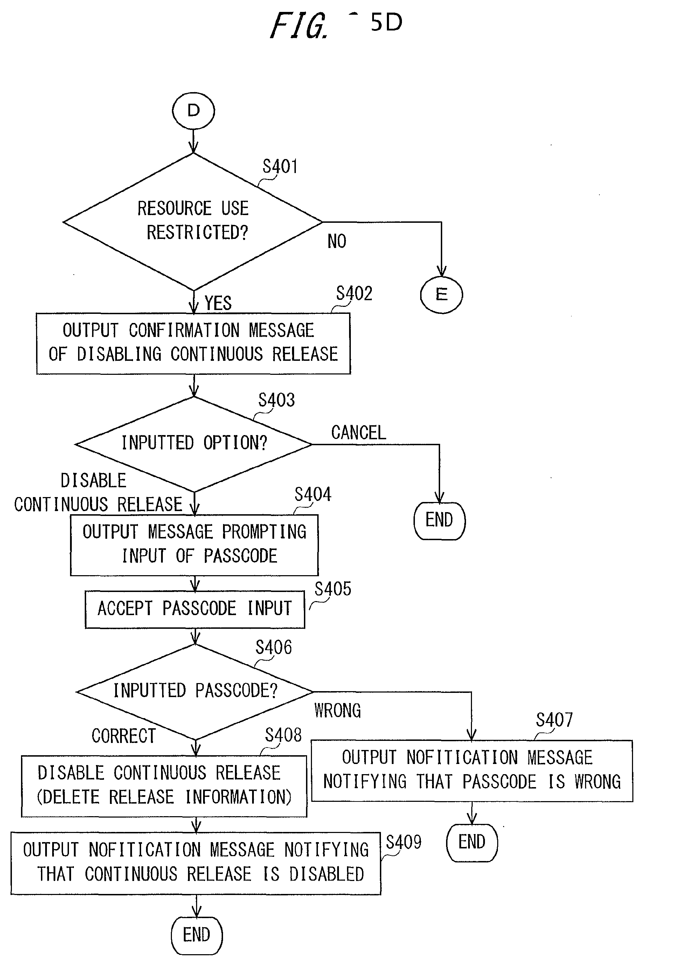

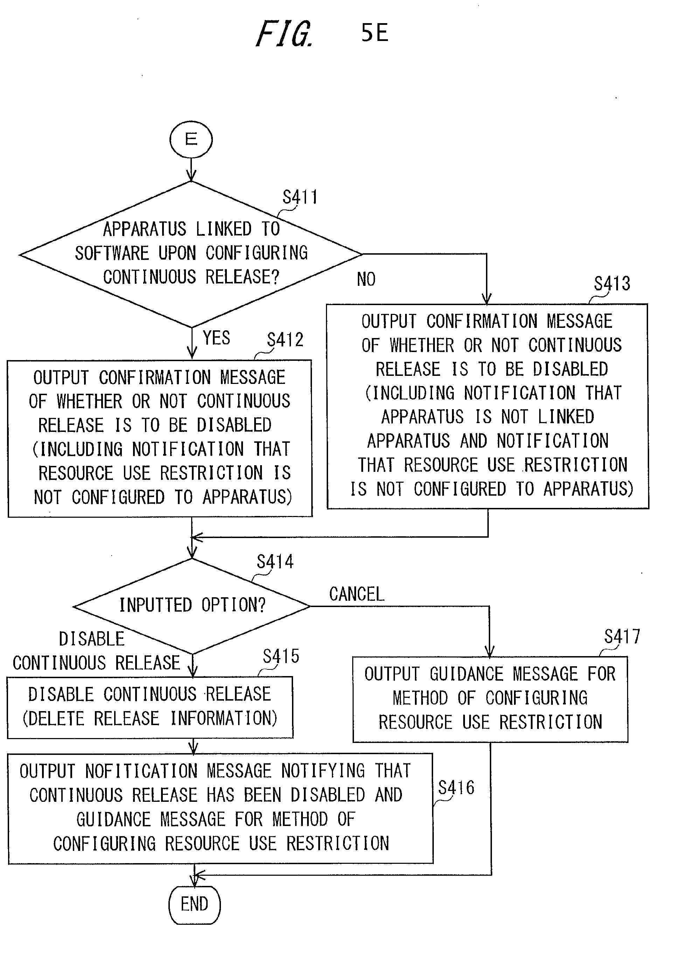

In addition, together with the confirmation message, the output control unit 58 outputs options that allow a user to select one of use of the resource, non-use of the resource, and disabling the continuous release to the display 12. For example, when the subject resource is a resource for communication, options such as "Communicate", "Do not communicate", and "Clear setting" may be output. The user selects a desired option by performing an operation to select the option using the input device 14 or the like. Moreover, a similar operation can be adopted as an operation for selecting an option in other steps described hereinafter. The input accepting unit 51 accepts an input of the option selected by the user and judges contents of the accepted option (step S103). At this point, if an input of an option indicating that the resource is to be used has been accepted, the processing proceeds to step S301. Details of processes shown in steps S301 and thereafter will be described later with reference to FIG. 5C. In addition, if an input of an option that indicates disabling continuous release has been accepted, the processing proceeds to step S401. Details of processes shown in steps S401 and thereafter will be described later with reference to FIGS. 5D and 5E.

If an input of an option indicating that the resource is not to be used has been accepted, the processing shown in the present flow chart is terminated. While game processing by the software read from the external memory 45 continues even when the processing shown in the present flow chart is terminated, the game processing is performed by the software without using a predetermined resource of the information processing apparatus 1.

Processes shown in steps S104 and S105 are processes executed when a judgment is made in step S101 that release information is not recorded (continuous release is not enabled). In steps S104 and S105, a confirmation message regarding the use of a predetermined resource of the information processing apparatus 1 is output and an input of an option is accepted. Since contents of processing in step S104 are similar to those described for step S102, a description thereof will be omitted.

In addition, together with the confirmation message, the output control unit 58 outputs options that allow a user to select use of a resource or non-use of the resource to the display 12. In this case, since release information is not recorded on the external memory 45 and continuous release is not enabled (refer to step S101), an option for disabling continuous release is not output. The input accepting unit 51 accepts an input of an option selected by the user and judges contents of the accepted option (step S105). At this point, if an input of an option indicating that the resource is to be used has been accepted, the processing proceeds to step S106. On the other hand, if an input of an option indicating that the resource is not to be used has been accepted, the processing shown in the present flow chart is terminated. While game processing by the software read from the external memory 45 continues even when the processing shown in the present flow chart is terminated, the game processing is performed by the software without using the predetermined resource of the information processing apparatus 1.

In step S106, a judgment is made on whether or not there is a restriction imposed on the use of a function specified by an administrator of the information processing apparatus 1 (for example, a parent (guardian) of a child who is a user of the information processing apparatus 1) using a "Use restriction set by parent (administrator)" function of the information processing apparatus 1. In this case, examples of a function that can be specified as a restriction subject by the administrator include a restriction of activation of software that satisfies a predetermined condition, a restriction of use of an Internet browser, a restriction of online purchasing of a product or a service, a restriction of display of a stereoscopic image, a restriction of transmission and reception of a still image, a moving image, sound, and the like, a restriction of communication with another information processing apparatus 1, a restriction of use of a function for registering another user as a friend, a restriction of download of software that satisfies a predetermined condition, and a restriction of reception and playback of streaming. In the information processing apparatus 1, a restriction of these functions can be realized by restricting the use of resources by software.

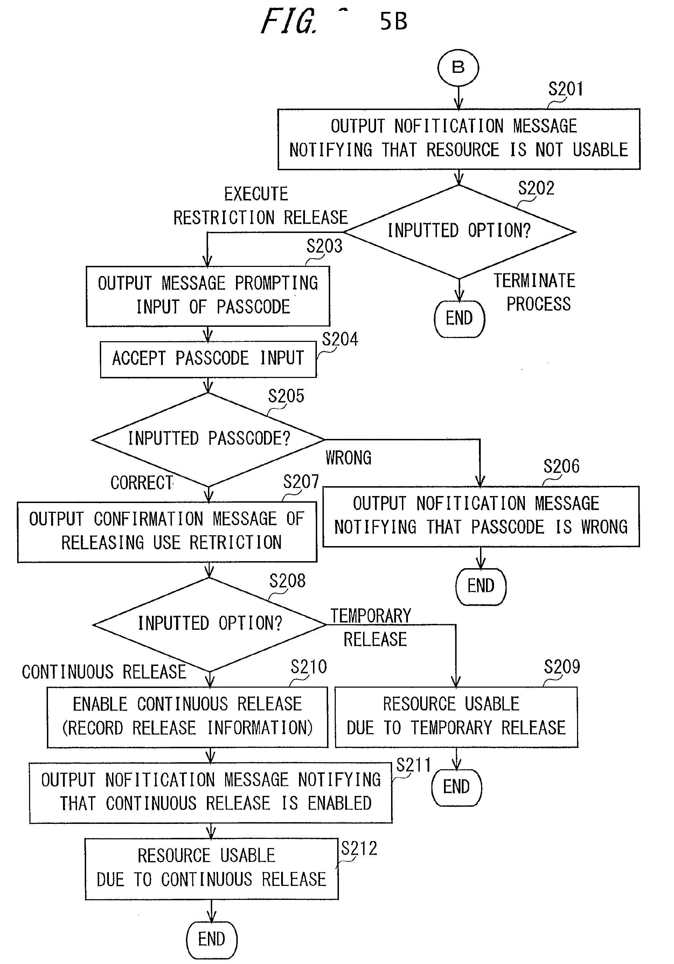

The releasing unit 53 judges whether or not a restriction by the restricting unit 52 is enabled in the information processing apparatus 1 by referencing setting contents retained in the data storage internal memory 35 of the information processing apparatus 1. In this case, a restriction by the restricting unit 52 refers to a restriction of use of all or a part of the resources (for example, resources for communication) of the information processing apparatus 1 by software. When it is judged that a restriction is enabled, the processing proceeds to step S201. Details of processes shown in steps S201 and thereafter will be described later with reference to FIG. 5B. On the other hand, when it is judged that a restriction is not enabled, the processing proceeds to step S107.

In step S107, a predetermined resource of the information processing apparatus 1 is used by software. In this case, since a restriction by the restricting unit 52 is not enabled, the software recorded on the external memory 45 is able to use the predetermined resource of the information processing apparatus 1. For example, the software recorded on the external memory 45 can communicate with another information processing apparatus 1 or the like by using a resource for communication of the information processing apparatus 1. Subsequently, processing shown in the present flow chart is terminated. Even when the processing shown in the present flow chart is terminated, game processing by the software read from the external memory 45 continues. Thereafter, the software can perform game processing by using the predetermined resource of the information processing apparatus 1.

Next, among the restriction release-related processes according to the present embodiment, a flow of processes related to a setting for enabling a release by the releasing unit 53 will be described with reference to FIG. 5B. The processes shown in the present flow chart are executed when it is judged in step S106 that a restriction by the restricting unit 52 is enabled, or when an apparatus ID is not consistent with collating information in step S302 (to be described later).

In steps S201 and S202, a message notifying a user that a predetermined resource of the information processing apparatus 1 cannot be used is output and an input of an option is accepted. For example, the output control unit 58 issues a notification to the effect that a predetermined resource of the information processing apparatus 1 (in the example of the message described above, a resource for communication) by outputting a message such as "The use restriction set by your parent (administrator) does not allow use of the communication function of this game apparatus" to the display 12 (step S201).

In addition, together with the confirmation message, the output control unit 58 outputs options that allow a user to select one of termination of restriction release-related processes and execution of restriction release to the display 12. For example, "End" and "Release restriction" may be output as the options. The input accepting unit 51 accepts an input of the option selected by the user and judges contents of the accepted option (step S202). At this point, if an input of an option indicating that the restriction release-related processes are to be terminated has been accepted, the processing shown in the present flow chart is terminated. In this case, while game processing by the software read from the external memory 45 can continue, since the restriction by the restricting unit 52 is not released, the use of a predetermined resource of the information processing apparatus 1 by the software is restricted. On the other hand, if an input of an option indicating executing continuous release has been accepted, the processing proceeds to step S203.

In steps S203 and S204, a message for prompting input of a password is output and an input of a password by the user is accepted. In this case, for example, the password is a personal identification number or the like which is used for authenticating an administrator of the information processing apparatus 1. For example, the output control unit 58 prompts the user to input a password for authenticating an administrator of the information processing apparatus 1 by outputting a message such as "Enter password for use restriction by your parent (administrator)" to the display 12 (step S203). The user inputs a password using the input device 14. Moreover, while a personal identification number is adopted as a password in the present embodiment, the password may contain a character string other than numerals. In addition, a mechanism that may be adopted for authenticating an administrator is not limited to a password. For example, other authentication techniques such as biometric authentication may be used for authenticating an administrator.

In steps S205 and S206, contents of the password are judged, and when the password is wrong, a message is output. The input accepting unit 51 accepts the input of the password selected by the user and judges contents of the accepted password by comparing the contents with a password retained in the data storage internal memory 35 in advance or the like (step S205). If the accepted password is not a correct password, the output control unit 58 outputs a message notifying the user that the password is wrong (for example, "Incorrect personal identification number") to the display 12 (step S206), and the processing shown in the present flow chart is terminated. In this case, while game processing by the software read from the external memory 45 can continue, since the restriction by the restricting unit 52 is not released, the use of a predetermined resource of the information processing apparatus 1 by the software is restricted. On the other hand, if the accepted password is correct, the processing proceeds to step S207.

In steps S207 and S208, a message for confirming whether the release of the restriction of use of the resource by the software is to be made continuous or temporary is output and an input of a selection result by the user is accepted. For example, the output control unit 58 outputs a message such as "Would you like to configure the communication function of this game apparatus to be always usable without restriction from now on?" to the display 12. By outputting such a message, the information processing apparatus 1 confirms whether or not the restriction by the restricting unit 52 of a predetermined resource of the information processing apparatus 1 (in the example of the message above, a resource for communication) is to be released (disabled) continuously (step S207).

In addition, together with the confirmation message, the output control unit 58 outputs options that allow a user to select whether to make the restriction release continuous or temporary to the display 12. For example, "Use continuously" and "Only this time" may be output as the options. The input accepting unit 51 accepts an input of an option selected by the user and judges contents of the accepted option (step S208). At this point, if an input of an option indicating that the restriction release is to be made continuous has been accepted, the processing proceeds to step S210. On the other hand, if an input of an option indicating that the restriction release is to be made temporary has been accepted, the processing proceeds to step S209.

In step S209, a predetermined resource of the information processing apparatus 1 is used by software. In this case, although the restriction by the restricting unit 52 is enabled (refer to steps S106 and S301), by temporarily releasing (ignoring) the restriction with respect to a release subject resource, the releasing unit 53 allows the software recorded on the external memory 45 to use a predetermined resource of the information processing apparatus 1. For example, the software recorded on the external memory 45 can communicate with another information processing apparatus 1 by using the network interface 36 or the like that is a resource for communication of the information processing apparatus 1. Subsequently, although the restriction release-related processes shown in the present flow chart are terminated, the game processing by the software read from the external memory 45 continues. Thereafter, the software can perform game processing using a predetermined resource of the information processing apparatus 1. However, since release information is not saved in this case, the restriction release is temporarily applied only during the present execution of the software.

In step S210, a setting for enabling continuous release is configured by recording release information on the external memory 45. Upon an input of an option indicating that the restriction release is to be made continuous being accepted in step S208, the release continuing unit 54 records release information including information capable of identifying the resource to be released (for example, a resource for communication) on the external memory 45 mounted to the information processing apparatus 1. Consequently, upon a next execution of the software, the recorded release information can be read and the continuous release is enabled.

Moreover, at this point, the release continuing unit 54 acquires an apparatus ID (identification information) of the information processing apparatus 1 from the data storage internal memory 35 of the information processing apparatus 1. The release continuing unit 54 then includes the acquired apparatus ID as collating information into the release information and records the release information. Accordingly, the software (the external memory 45) can be linked to the information processing apparatus 1 in which the software is currently being executed. In other words, by including the apparatus ID as collating information into the release information, when the software is next activated, the apparatus ID recorded on the external memory 45 can be referenced to confirm a combination of the software (external memory 45) for which continuous release has been permitted by the administrator and the information processing apparatus 1. A specific confirmation process for confirming a combination of software and the information processing apparatus 1 will be described in steps S302, S304, S411, and the like. Subsequently, the processing proceeds to step S211.

In step S211, a message for notifying the user that continuous release is enabled is output. For example, the output control unit 58 notifies the user that continuous release is enabled by outputting a message such as "Apparatus information has been recorded. When playing with this game apparatus from now on, the communication function can be used without restriction even if use restriction set by your parent (administrator) still applies." to the display 12.

In step S212, a predetermined resource of the information processing apparatus 1 is used by software. In this case, although the restriction by the restricting unit 52 is enabled (refer to steps S106 and S301), by releasing (ignoring) the restriction with respect to a release subject resource, the releasing unit 53 allows the software recorded on the external memory 45 to use a predetermined resource of the information processing apparatus 1. Subsequently, although the restriction release-related processes shown in the present flow chart are terminated, the game processing by the software read from the external memory 45 continues. Thereafter, the software can perform game processing using a predetermined resource of the information processing apparatus 1. In addition, since release information has been saved at this point (refer to step S210), the restriction release is continuous and remains enabled even upon a next execution of the software.

Next, among the restriction release-related processes according to the present embodiment, a flow of processes related to restriction release in a state where continuous release is enabled will be described with reference to FIG. 5C. The processes shown in the present flow chart are executed when an input of an option indicating that a resource is to be used is accepted in step S103 described earlier (refer to FIG.5A).

In step S301, a judgment is made on whether or not the use of a resource specified by the administrator is restricted by the "Use restriction set by your parent (administrator)" function of the information processing apparatus 1. The releasing unit 53 judges whether or not a restriction by the restricting unit 52 is enabled in the information processing apparatus 1 by referencing setting contents retained in the data storage internal memory 35 of the information processing apparatus 1. When it is judged that a restriction is enabled, processing proceeds to step S302. On the other hand, when it is judged that a restriction is not enabled, the processing proceeds to step S304.

In step S302, a judgment is made on whether or not the information processing apparatus 1 is the information processing apparatus linked to the software upon configuring continuous release. The judging unit 55 judges whether or not the information processing apparatus 1 is the information processing apparatus linked to the software upon configuring continuous release by reading the release information recorded on the external memory 45 and the apparatus ID retained in the data storage internal memory 35 of the information processing apparatus 1 and by collating the collating information contained in the release information with the apparatus ID. When it is judged that the collating information and the apparatus ID are consistent, the processing proceeds to step S303. On the other hand, if the collating information and the apparatus ID are not consistent, the processing proceeds to step S201 shown in FIG. 5B. In other words, in a state where a restriction by the restricting unit 52 is enabled (refer to step S301), when the judging unit 55 judges that the collating information and the apparatus ID are not consistent, a process for enabling a release by the releasing unit 53 is executed (refer to FIG. 5B).

In step S303, a predetermined resource of the information processing apparatus 1 is used by software. In this case, although the restriction by the restricting unit 52 is enabled (refer to step S301), by releasing (ignoring) the restriction with respect to the resource indicated in the release information, the releasing unit 53 allows the software recorded on the external memory 45 to use a predetermined resource of the information processing apparatus 1. Subsequently, although the restriction release-related processes shown in the present flow chart are terminated, the game processing by the software read from the external memory 45 continues. Thereafter, the software can perform game processing using a predetermined resource of the information processing apparatus 1.

In steps S304 and S305, a judgment is made on whether or not collating information recorded on the external memory 45 and the apparatus ID of the information processing apparatus 1 are consistent, and when it is judged that that the collating information and the apparatus ID are consistent, a predetermined resource of the information processing apparatus 1 is used by the software. Since contents of processing are similar to those described for steps S302 and S303, a description thereof will be omitted. On the other hand, when it is judged that the collating information and the apparatus ID are not consistent, the processing proceeds to step S306.

In steps S306 and S307, a message informing that use of a predetermined resource of the information processing apparatus 1 is permitted is output and the predetermined resource of the information processing apparatus 1 is used by the software. In this case, although the information processing apparatus 1 in which the software is currently being executed differs from the information processing apparatus 1 associated upon configuring continuous release the software recorded on the external memory 45 is able to use the predetermined resource of the information processing apparatus 1, since a restriction by the restricting unit 52 is not enabled in the information processing apparatus 1 in which the software is being executed (refer to step S301). Therefore, for example, the output control unit 58 outputs a message such as "Although this game apparatus is not the game apparatus configured to continuously release the communication function, since use restriction is not set by your parent (administrator), the communication function can be used regardless of the continuous release configuration. To restrict the communication function on this apparatus, first configure use restriction by your parent (administrator) from the HOME menu." to the display 12 (step S306). Meanwhile, the game processing by the software read from the external memory 45 continues. Thereafter, the software can perform game processing by using the predetermined resource of the information processing apparatus 1 (step S307). In other words, when a restriction by the restricting unit 52 is not enabled, the resource can be used regardless of the result of collation (refer to steps S304 to S307). Subsequently, processing shown in the present flow chart is terminated.

Next, among the restriction release-related processes according to the present embodiment, a flow of processes related to disabling continuous release will be described with reference to FIGS. 5D and 5E. The processes shown in the present flow chart are executed when an input of an option indicating disabling of continuous release is accepted in step S103 described earlier (refer to FIG. 5A).

In step S401, a judgment is made on whether or not the use of a resource specified by the administrator is restricted by the "Use restriction set by your parent (administrator)" function of the information processing apparatus 1. Since contents of processing are similar to those described for step S301, a description thereof will be omitted. When it is judged that a restriction by the restricting unit 52 is enabled, processing proceeds to step S402. On the other hand, when it is judged that a restriction is not enabled, the processing proceeds to step S411 shown in FIG. 5E.

In steps S402 and S403, a confirmation message regarding disabling continuous release is output and an input of an option is accepted. The output control unit 58 confirms that the setting for enabling continuous release which had been set in step S210 is to be released (disabled) by outputting a message such as "Continuous release of the communication function is currently enabled. Do you wish to clear the setting and disable continuous release?" to the display 12 (step S402).

In addition, together with the confirmation message, the output control unit 58 outputs options that allow a user to select one of disabling the continuous release and cancellation (maintaining the continuous release-enabled state) to the display 12. For example, "Disable setting" and "Do not change" may be output as the options. The input accepting unit 51 accepts an input of an option selected by the user and judges contents of the accepted option (step S403). At this point, if an input of an option that indicates disabling continuous release has been accepted, the processing proceeds to step S404. On the other hand, if an input of an option indicating cancellation (maintaining the continuous release-enabled state) has been accepted, the processing shown in the present flow chart is terminated.

In steps S404 and S405, a message for prompting input of a password for authenticating an administrator of the information processing apparatus 1 is output and an input of a password by the user is accepted. In addition, in steps S406 and S407, contents of the password are judged, and when the password is wrong, a message is output. Since details of the processes shown in steps S404 to S407 are approximately the same as the contents described for steps S203 to S206 of FIG. 5B, a description thereof will be omitted. When the accepted password is correct, the processing proceeds to step S408.

In step S408, release information is deleted from the external memory 45. The configuring unit 56 disables continuous release by deleting the release information (containing collating information) which indicates that the continuous release is enabled and which is recorded on the external memory 45 mounted to the information processing apparatus 1. Accordingly, when the software is next activated, the restriction by the restricting unit 52 can be prevented from being released (disabled) due to a judgment made in the judgment process of step S101 that release information does not exist. Subsequently, the processing proceeds to step S409.

In step S409, a notification that the release information has been deleted is issued to the user. The output control unit 58 notifies the user that the release information has been deleted (the continuous release has been disabled) by outputting a message such as "Continuous release setting has been cleared. From now on, communication by the game apparatus subjected to use restriction set by your parent (administrator) will be restricted." to the display 12. Subsequently, processing shown in the present flow chart is terminated. In this case, while game processing by the software read from the external memory 45 can continue, since the restriction by the restricting unit 52 is not released, the use of a predetermined resource of the information processing apparatus 1 by the software is restricted.

As described above, when it is judged in step S401 that a restriction by the restricting unit 52 is not enabled, the processing proceeds to step S411 shown in FIG. 5E.

In steps S411 to S413, a judgment is made on whether or not the collating information recorded on the external memory 45 is consistent with the apparatus ID of the information processing apparatus 1 and a confirmation in accordance with the judgment result is output. Since details of the judgment process in step S411 are similar to the contents described for step S302, a description thereof will be omitted.

When it is judged that the collating information and the apparatus ID are consistent with each other, for example, the output control unit 58 confirms with the user whether to disable continuous release or not by outputting a message such as "Since use restriction by your parent (administrator) is not set for this game apparatus, the communication function can currently be used regardless of the continuous release setting. Do you wish to clear the setting?" to the display 12 (step S412). On the other hand, when the collating information and the apparatus ID are not consistent with each other, for example, the output control unit 58 confirms with the user whether to disable continuous release or not by outputting a message such as "This game apparatus is not the game apparatus configured to continuously release the communication function. Since use restriction is not set by your parent (administrator), the communication function can be used regardless of the continuous release setting. Do you wish to clear the setting?" to the display 12 (step S413). Subsequently, the processing proceeds to step S414.

In step S414, an input of an option is accepted. Together with the confirmation message output in step S412 or S413, the output control unit 58 outputs options that allow a user to select one of disabling the continuous release and cancellation (maintaining the continuous release-enabled state) to the display 12. Since specific examples of output options and operations by the user are approximately similar to those described for step S403, a description thereof will be omitted. The input accepting unit 51 accepts an input of an option selected by the user and judges contents of the accepted option (step S414). At this point, if an input of an option that indicates disabling the continuous release has been accepted, the processing proceeds to step S415. On the other hand, if an input of an option indicating cancellation (maintaining the continuous release-enabled state) has been accepted, the processing proceeds to step S417.

In steps S415 and S416, release information recorded on the external memory 45 is deleted and a guidance message to the user is output. Since details of the process shown in step S415 are similar to the contents described for step S408, a description thereof will be omitted. When the release information is deleted, for example, the output control unit 58 guides the user to a method of enabling a restriction in the information processing apparatus 1 for which a restriction by the restricting unit 52 is not enabled by outputting a message such as "The continuous release setting has been cleared. If you wish to set a restriction on this apparatus, configure use restriction by your parent (administrator) from the HOME menu" or the like to the display 12 (step S416). Subsequently, the processing shown in the present flow chart is terminated.

In step S417, a guidance message to the user is output. When deletion of release information is cancelled or, in other words, when a continuous release-enabled state is maintained, the output control unit 58 guides the user to a method of enabling a restriction in the information processing apparatus 1 for which a restriction by the restricting unit 52 is not enabled by outputting a message such as "If you wish to set a restriction on this apparatus, configure use restriction by your parent (administrator) from the HOME menu" or the like to the display 12. Subsequently, processing shown in the present flow chart is terminated.

### <Variations of embodiments>

Hereinafter, variations applicable to the embodiments above will be described.

### (First modification)

In the process shown in step S210 described above, in addition to an apparatus ID, the release continuing unit 54 may acquire a password for authenticating an administrator of the information processing apparatus 1 or 1a from the information processing apparatus 1 or 1a and generate release information including collating information containing the acquired apparatus ID and password.

Subsequently, in the collation processes in steps S302 and S304, the judging unit 55 collates collating information (apparatus ID and password) contained in the release information with an apparatus ID and a password acquired from the information processing apparatus 1 or 1a (recorded on a medium built into the information processing apparatus 1 or 1a for user authentication) during the collation process in order to determine whether or not the information processing apparatus 1 or 1a in which the software is currently being executed is the information processing apparatus 1 or 1a associated when configuring the continuous release.

By including a password of the information processing apparatus 1 or 1a in the collating information, continuous release settings can be collectively reset by changing a password. In other words, even in a case where release information is recorded in a plurality of software titles, by changing the password retained by the information processing apparatus 1 or 1a, the administrator can foil the collation by the judging unit 55 in steps S302 and S304 and uniformly disable continuous release settings for software in which release information had been recorded prior to changing the password.

Moreover, collating information may further contain information indicating the number of times the password has been changed, a time and date of a latest change made to the password, and the like. By having both the collating information in the information processing apparatus 1 or 1a and the collating information in the software retain such information and collating the information together with the password during the collation process, the collation can be prevented from erroneously succeeding even if the password is changed a plurality of times only to end up being identical to a password used in the past.

### (Second modification)

A release of continuous restriction by the release continuing unit 54 may be configured for each user that is set to the information processing apparatus 1 or 1a. For example, in the process shown in step S210, in addition to an apparatus ID, the release continuing unit 54 may acquire, from the information processing apparatus 1 or 1a, identification information of a user currently logged into the information processing apparatus 1 or 1a and may generate release information including the acquired user identification information. By including user identification information in the release information, in the process shown in step S101, identification information of the user currently logged into the information processing apparatus 1 or 1a and the identification information included in the release information can be collated and a judgment can be made on whether or not continuous release of the software is enabled for the user.

### (Third modification)

A release of continuous restriction by the release continuing unit 54 may be configured for each user that is set to software. For example, in the process shown in step S210, the release continuing unit 54 may record release information in a user information area prepared in the software for each user. In this case, for example, a user information area in software refers to a per-user save data area in the software or a character data area for each user in game software. By recording release information in a user information area, in the process shown in step S101, a judgment can be made on whether or not release information exists in a user information area currently being loaded. In other words, by applying this modification, a judgment can be made on whether or not continuous release of software is enabled for a user associated to a user information area that is loaded upon execution of the software, and the releasing unit 53 can release the restriction by the restricting unit 52 for each user set to the software.

### (Fourth modification)

Moreover, in the embodiments described above, a judgment method is adopted in which an enabled/disabled state of continuous release is judged based on the presence/absence of release information. However, instead of such a method, other judgment methods may be adopted such as a judgment method which judges that continuous release is enabled/disabled based on a state (true/false) of a continuous release flag included in release information.

When a method is adopted in which an enabled/disabled state of continuous release is judged based on a state of a continuous release flag, in the process of enabling or disabling continuous release among the restriction release-related processes described above, enabled/disabled states of continuous release are switched by turning on/off the flag. More specifically, for example, in the process shown in step S210, a setting for enabling continuous release is configured by setting the continuous release flag included in the release information to "True". In addition, for example, in the processes shown in step S408 and S415, a setting for disabling continuous release is configured by setting the continuous release flag included in the release information to "False".

### (Fifth modification)

As described earlier, specific contents and sequences of processes depicted in flow charts according to the present embodiment are examples for implementing the present invention, and specific contents and sequences of the processes may be selected as appropriate in accordance with embodiments of the present invention. For example, while the embodiments described above adopt a judgment sequence in which after a judgment is made on whether or not continuous release is enabled by the releasing unit 53 (refer to step S101), a judgment is made on whether or not a restriction by the restricting unit 52 is enabled (refer to steps S106, S301, and S401), this judgment sequence may be reversed. In other words, after a judgment is made on whether or not a restriction by the restricting unit 52 is enabled, a judgment may be made on whether or not continuous release is enabled by the releasing unit 53.

### <Advantageous Effects>

With the information processing apparatus 1 or 1a according to the present embodiment, an overall restriction by the restricting unit 52 can be enabled while, at the same time, software specified by an administrator can be subjected to continuous restriction release. As a result, the hassle of operations performed by the administrator may be reduced. In addition, when recording release information into executed software, continuous restriction can be released on a per-software basis without having to make particular changes to existing systems of the information processing apparatus 1 or 1a.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. An information processing program that causes a computer of an information processing apparatus including restricting means for restricting use of software or use of a function of the information processing apparatus by software, to function as:
releasing means for releasing, on a per software basis, a restriction by the restricting means even in a state where the restriction by the restricting means is enabled; and
release continuing means for making the release by the releasing means continuous by permitting reading of release information indicating that the release by the releasing means is enabled, upon execution of release subject software that is to be subjected to the release.

2. The information processing program according to claim 1, wherein
software to be subjected to a restriction by the restricting means includes at least a part of the information processing program, and
the release continuing means permits reading of the release information upon execution of the release subject software by at least a part of the information processing program included in the software being executed.

3. The information processing program according to claim 1 or 2, further causing the computer to function as:
judging means for judging whether or not the information processing apparatus has been specified as an information processing apparatus that provides the release subject software with a release by the releasing means, wherein
the releasing means releases the restriction by the restricting means when the judging means judges that the information processing apparatus is the specified information processing apparatus.

4. The information processing program according to claim 3, wherein
the release information includes collating information for judging whether or not the information processing apparatus is the specified information processing apparatus, and
the judging means judges whether or not the information processing apparatus is the specified information processing apparatus by collating predetermined information that can be acquired from the information processing apparatus with the collating information.

5. The information processing program according to claim 4, wherein
the predetermined information that can be acquired from the information processing apparatus includes a password for authenticating an administrator of the information processing apparatus.

6. The information processing program according to claim 4 or 5, further causing the computer to function as:
modifying means for modifying the predetermined information that can be acquired from the information processing apparatus.

7. The information processing program according to any one of claims 1 to 6, wherein
the release continuing means permits reading of the release information upon execution of the release subject software by having this software retain the release information.

8. The information processing program according to any one of claims 1 to 7, wherein
the software is recorded on a portable medium that is attachable/detachable to/from the information processing apparatus, and
the release continuing means permits reading of the release information when the software recorded on the portable medium is mounted to the information processing apparatus and executed, by having the software retain the release information.

9. The information processing program according to any one of claims 1 to 8, further causing the computer to function as:
configuring means for enabling or disabling a release by the releasing means and for, when enabling the release, configuring whether the release by the releasing means is to be made continuous or temporary by determining whether to cause the release continuing means to permit reading of the release information.

10. The information processing program according to any one of claims 1 to 9, wherein
the releasing means releases a restriction by the restricting means for each user registered to the software.

11. The information processing program according to any one of claims 1 to 10, wherein
the release continuing means permits reading of the release information by causing the release information to be stored in storage means that can be referenced by the information processing apparatus, and
the releasing means releases a restriction by the restricting means on a per software basis by referencing the release information stored in the storage means, upon execution of release subject software to be subjected to the release.

12. The information processing program according to any one of claims 1 to 11, wherein
the restricting means restricts use of all or a part of resources of the information processing apparatus by software.

13. An information processing apparatus comprising: restricting means for restricting use of software or use of a function of the information processing apparatus by software;
releasing means for releasing, on a per software basis, a restriction by the restricting means even in a state where the restriction by the restricting means is enabled; and
release continuing means for making the release by the releasing means continuous by permitting reading of release information indicating that the release by the releasing means is enabled, upon execution of release subject software that is to be subjected to the release.

14. An information processing system comprising an information processing apparatus including restricting means for restricting use of software or use of a function of the information processing apparatus by software, the information processing system further comprising:
releasing means for releasing, on a per software basis, a restriction by the restricting means even in a state where the restriction by the restricting means is enabled; and
release continuing means for making the release by the releasing means continuous by permitting reading of release information indicating that the release by the releasing means is enabled, upon execution of release subject software that is to be subjected to the release.

15. An information processing method for causing a computer of an information processing apparatus including restricting means for restricting use of software or use of a function of the information processing apparatus by software, to execute the steps of:
releasing, on a per software basis, a restriction by restricting means even in a state where the restriction by the restricting means is enabled; and
making the release performed in the releasing step continuous by permitting reading of release information indicating that the release in the releasing step is enabled, upon execution of release subject software that is to be subjected to the release.
